Europäisches Patentamt

European Patent Office

Office européen des brevets

(19)

(11) Veröffentlichungsnummer: **0 306 590 B1**

(12) # EUROPÄISCHE PATENTSCHRIFT

(45) Veröffentlichungstag der Patentschrift: **21.08.91**

(51) Int. Cl.⁵: **B41J 29/02, F16B 21/07**

(21) Anmeldenummer: **87730104.4**

(22) Anmeldetag: **09.09.87**

(54) **Achsendenlager für Büromaschinen, insbesondere für Matrixdrucker.**

(43) Veröffentlichungstag der Anmeldung:
**15.03.89 Patentblatt 89/11**

(45) Bekanntmachung des Hinweises auf die
Patenterteilung:
**21.08.91 Patentblatt 91/34**

(84) Benannte Vertragsstaaten:
**AT BE CH DE FR GB IT LI NL**

(56) Entgegenhaltungen:
**FR-A- 1 366 109**

**IBM TECHNICAL DISCLOSURE BULLETIN,
Band 26, Nr. 1, Juni 1983, Seite 291, New
York, US; W.R. CROWE "Retaining plastic
parts within themselves"**

(73) Patentinhaber: **MANNESMANN Aktiengesellschaft
Mannesmannufer 2
W-4000 Düsseldorf 1(DE)**

(72) Erfinder: **Beck, Dieter
Gartenstrasse 5
W-7907 Setzingen(DE)**

(74) Vertreter: **Meissner, Peter E., Dipl.-Ing. et al
Patentanwaltsbüro Meissner & Meissner,
Herbertstrasse 22
W-1000 Berlin 33(DE)**

## Beschreibung

Die Erfindung betrifft ein Achsendenlager für Büromaschinen, insbesondere für Matrixdrucker, die Achsen aufweisen, an deren Enden Einstichnuten vorgesehen sind, und die mit ihren Achsenden in Lagern von Wand-, Boden- oder Deckenplatten gehalten sind.

Nach dem Stand der Technik werden Achsen, die zwischen Seitenplatinen von Matrixdruckern verlaufen, mittels Axialsicherungsringen befestigt, die die Achse in Achsrichtung zur Seitenplatine festlegen. Außerdem ist eine Lagerbuchse erforderlich, die in der Seitenplatine befestigt wird. Die Lagerbuchsen müssen relativ teuer aus Metall gefertigt werden. Beide Teile (Axialsicherungsring und Metallbuchse) erfordern eine relativ aufwendige Montage.

Der Erfindung liegt deshalb die Aufgabe zugrunde, für Achsendenlager von Büromaschinen, insbesondere von Matrixdruckern, eine Gestaltung zu schaffen, die wirtschaftlicher in der Herstellung und bei der Montage ist.

Die gestellte Aufgabe wird erfindungsgemäß dadurch gelöst, daß ein Lagerkörper mit einer Bohrung für die Achse gebildet ist, der einen nach außen ragenden Außenschaft aufweist, der in axialer Richtung zumindest zweigeteilt ist, wobei ein Außenschaftteil einen axialen Anschlag bildet und zumindest ein anderer Außenschaftteil federnd in die Einstichnute eingreift. Diese Gestaltung beinhaltet gleichzeitig die Funktionen eines Axialsicherungsringes sowie einer Lagerbuchse, ist jedoch wegen der Doppelfunktion wirtschaftlicher herstellbar und einfacher zu montieren.

Der Anwendungsbereich der Erfindung wird außerdem dadurch erweitert, daß der Außenschaftteil mit dem axialen Anschlag für eine im Querschnitt polygonale Achse ausgebildet ist.

Eine weitergehende Anwendung ergibt sich außerdem dadurch, daß der Außenschaftteil und ein Innenschaftteil Teil einer Bauteilwandung sind.

Besonders wirtschaftlich kann der Gegenstand der Erfindung dadurch geschaffen werden, indem der Lagerkörper einstückig aus Kunststoff hergestellt ist.

Eine noch breitere Anwendungsmöglichkeit ergibt sich außerdem dadurch, daß der Lagerkörper sich in Richtung der Wand-, Boden- oder Deckenplatte erstreckt und weitere angeformte Achsen oder Zahnräder trägt.

Ein Ausführungsbeispiel der Erfindung ist in der Zeichnung dargestellt und wird im folgenden näher beschrieben. Es zeigen:

Fig. 1 eine Achsendenlagerung für einen Matrixdrucker im Längsschnitt und

Fig. 2 eine Seitenansicht in Richtung des Pfeiles A

Die Achse 1 ist in Achsendenlagern 2 und 3 aufgenommen und weist an den Achsenden 1a und 1b Einstichnuten 4 auf. Die Achsendenlager 2 und 3 sind in Wandplatten 5 befestigt. Anstelle der Wandplatten 5 können Boden- oder Deckenplatten treten (nicht gezeichnet).

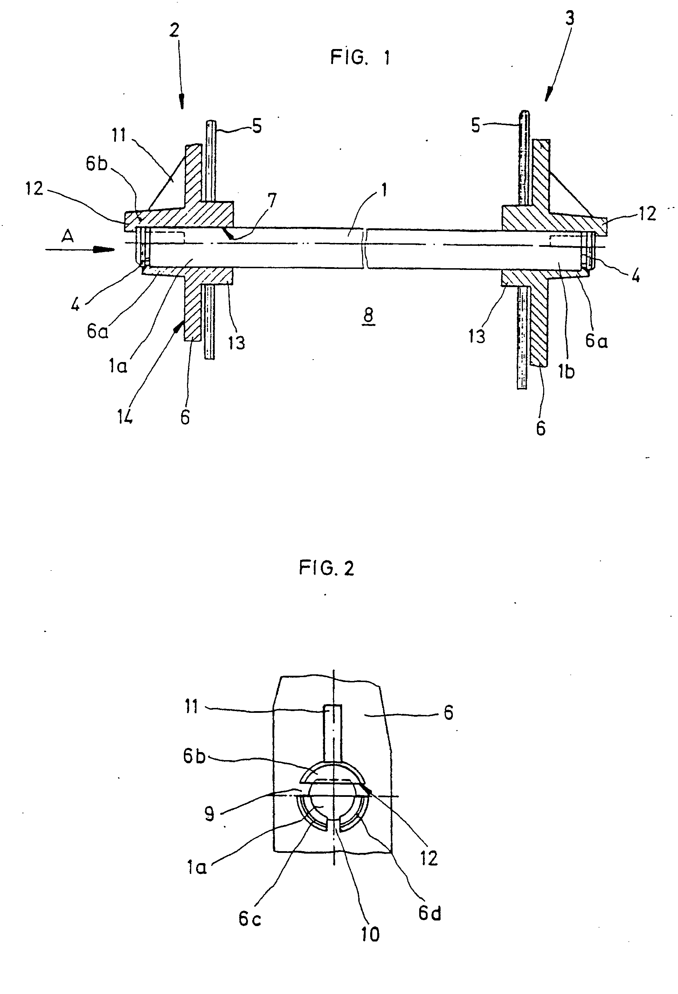

Jedes Achsendenlager 2 und 3 besitzt einen Lagerkörper 6, der für die Achse 1 mit einer toleranzabhängigen Bohrung 7 ausgestattet ist. Von der Wandplatte 5 ragt ein Außenschaft 6a nach außen (dieser befindet sich außerhalb der beiden dargestellten Wandplatten 5, die zusammen einen Innenraum 8 bilden). Dieser Außenschaft 6a, der die Grundform einer konischen Nabe besitzt, ist in Richtung A betrachtet (Fig. 2) mit axial parallelverlaufenden Schlitzen 9 und 10 versehen, d.h. die Schlitze 9 und 10 teilen jeweils für sich den Außenschaft 6a in zwei Teile. Im Ausführungsbeispiel ergeben die Schlitze 9 und 10 eine Dreiteilung, so daß ein Außenschaftteil 6b sowie weitere Außenschaftteile 6c und 6d entstehen.

Im Bereich des Außenschaftteils 6b ist eine Verstärkungsrippe 11 angeordnet. Außerdem weist der Außenschaftteil 6b einen etwa hakenförmigen axialen Anschlag 12 auf. Die beiden anderen Außenschaftteile 6c und 6d greifen durch die Schlitze 9 und 10 bedingt federnd in die jeweilige Einstichnute 4 ein.

Es ist nicht notwendig, die Achse 1 mit einem runden Querschnitt zu versehen. Der Außenschaftteil 6b mit dem axialen Anschlag 12 kann auch für eine im Querschnitt polygonale Achse 1 geformt sein.

Der Lagerkörper 6 ist vorteilhafterweise einstückig aus Kunststoff hergestellt. Hierbei sind der Außenschaftteil 6b und ein Innenschaftteil 13 als Teil einer Bauteilwandung 14 weitergebildet.

In Weiterverfolgung einer mehrfunktionalen Gestaltung des Lagerkörpers 6 erstreckt sich dieser in Richtung der Wand-, Boden- oder Deckenplatte 5 und trägt (nicht gezeichnet) angeformte Achsen oder Zahnräder, die funktional mit der Achse 1 in Beziehung stehen.

## Patentansprüche

1. Achsendenlager für Büromaschinen, insbesondere für Matrixdrucker, die Achsen (1) aufweisen, an deren Enden Einstichnuten (4) vorgesehen sind, und die mit ihren Achsenden (1a, 1b) in Lagern von Wand- Boden- oder Deckenplatten (5) gehalten sind,
dadurch gekennzeichnet,
daß ein Lagerkörper (6) mit einer Bohrung (7) für die Achse (1) gebildet ist, der einen nach außen ragenden Außenschaft (6a) aufweist, der in axialer Richtung zumindest zweigeteilt ist, wobei ein Außenschaftteil (6b) einen axialen Anschlag (12) bildet und zumindest ein anderer Außenschaftteil (6c;6d) federnd in die Einstichnute (4) eingreift.

2. Achsendenlager nach Anspruch 1,
dadurch gekennzeichnet,
daß der Außenschaftteil (6b) mit dem axialen Anschlag (12) für eine im Querschnitt polygonale Achse (1) ausgebildet ist.

3. Achsenendenlager nach den Ansprüchen 1 oder 2,
dadurch gekennzeichnet,
daß der Außenschaftteil (6b) und ein Innenschaftteil (13) Teil einer Bauteilwandung (14) sind.

4. Achsendenlager nach den Ansprüchen 1 bis 3,
dadurch gekennzeichnet,
daß der Lagerkörper (6) einstückig aus Kunststoff hergestellt ist.

5. Achsendenlager nach einem oder mehreren der Ansprüche 1 bis 4,
dadurch gekennzeichnet,
daß der Lagerkörper (6) sich in Richtung der Wand-, Boden- oder Deckenplatte (5) erstreckt und weitere angeformte Achsen oder Zahnräder trägt.

## Claims

1. Axle end bearing for office machines, in particular for matrix printers, which have axles (1) on the ends of which there are provided recessed grooves (4), and which are held with their axle ends (1a, 1b) in bearings of wall, base or top plates (5),
characterised in that
a bearing body (6) is formed with a bore (7) for the axle (1), which body has an outward-projecting outer shaft (6a) which is divided at least into two in the axial direction, with one outer shaft section (6b) forming an axial shoulder (12) and at least one other outer shaft section (6c; 6d) engaging resiliently in the recessed grooves (4).

2. Axle end bearing according to Claim 1,
characterised in that
the outer shaft section (6b) with the axial shoulder (12) is designed for an axle (1) which is polygonal in cross-section.

3. Axle end bearing according to Claims 1 or 2,
characterised in that
the outer shaft section (6b) and an inner shaft section (13) are part of a component wall (14).

4. Axle end bearing according to Claims 1 to 3,
characterised in that
the bearing body (6) is made in one piece of plastic.

5. Axle end bearing according to one or more of Claims 1 to 4,
characterised in that
the bearing body (6) extends in the direction of the wall, base or top plate (5) and has additional shaped-on axles or toothed wheels.

## Revendications

1. Palier d'extrémité d'axe pour machines de bureau, en particulier pour imprimantes à matrice, qui présentent des axes (1), aux extrémités desquels sont prévues des gorges (4) et qui sont maintenus, par leurs extrémités (1a,1b), dans des paliers de plaques de paroi, de fond ou de recouvrement (5),
caractérisé en ce qu'un corps de palier (6) avec un perçage (7) pour l'axe (1) est formé, corps qui présente un arbre externe (6a) faisant saillie vers l'extérieur, qui est au moins divisé en deux en direction axiale, une partie d'arbre externe (6b) formant une butée axiale (12) et au moins une autre partie d'arbre externe (6c;6d) s'engageant élastiquement dans la gorge (4).

2. Palier d'extrémité d'axe selon la revendication 1,
caractérisé en ce que la partie d'arbre externe (6b) avec la butée axiale (12) est réalisée pour un axe (1) de section transversale polygonale.

3. Palier d'extrémité d'axe selon la revendication 1 ou 2,
caractérisé en ce que la partie d'arbre externe (6b) et une partie d'arbre interne (13) font partie d'un élément de construction formant paroi (14).

4. Palier d'extrémité d'axe selon les revendications 1 à 3,
caractérisé en ce que le corps de palier (6) est réalisé, en une pièce, en matière synthétique.

5. Palier d'extrémité d'axe selon une ou plusieurs des revendications 1 à 4,
caractérisé en ce que le corps de palier (6) s'étend en direction de la plaque de paroi, de fond ou de recouvrement (5), et porte d'autres roues dentées ou axes façonnés.

FIG. 1

FIG. 2